# EUROPEAN PATENT APPLICATION

(11) **EP 4 745 192 A1**
(43) Date of publication of application: **20.05.2026**
(21) Application number: 24839556.8
(22) Date of filing: 28.06.2024
(51) Int. Cl.: C08L 67/04, B29C 48/08, B29C 48/305, B29C 55/02, C08J 5/18, C08K 3/34, C08K 5/20, C08L 101/16

(54) **EXTRUDED FILM**

(30) Priority: 13.07.2023 JP 2023114834; 13.07.2023 JP 2023114835; 13.07.2023 JP 2023114836
(71) Applicant: Kaneka Corporation, Osaka-shi, Osaka 530-8288 (JP)
(72) Inventor: SAITO, Arihiro, Osaka 566-0072 (JP); KITAYAMA, Fuminobu, Osaka 566-0072 (JP); OKURA, Tetsuo, Osaka 566-0072 (JP)
(74) Representative: Vossius & Partner Patentanwälte Rechtsanwälte mbB
(86) International application number: PCT/JP2024/023656
(87) International publication number: WO 2025/013664

(57) **Abstract**

An extruded film contains a poly(3-hydroxyalkanoate) copolymer (A) and a poly(3-hydroxybutyrate) (B). The copolymer (A) preferably includes at least two poly(3-hydroxyalkanoate) copolymers differing in the types and/or proportions of constituent monomers. The copolymer (A) may include a copolymer (A-1) that contains 3-hydroxybutyrate units and other hydroxyalkanoate units and in which the proportion of the other hydroxyalkanoate units is 24 mol% or more.

## Description

### Technical Field

The present invention relates to an extruded film containing a poly(3-hydroxyalkanoate) resin.

### Background Art

Separate collection and composting of raw garbage have recently been promoted, especially in Europe, and there is a demand for plastic products that are compostable together with raw garbage. In addition, plastics with marine degradability are regarded as promising materials to solve the problem of plastic-induced marine pollution.

Poly(3-hydroxyalkanoate) resins, typified by poly(3-hydroxybutyrate-co-3-hydroxyhexanoate), have drawn attention as materials having compostability and marine degradability.

Investigations have been conducted into the use of poly(3-hydroxyalkanoate) resins as resin materials for forming various types of molded articles. For example, Patent Literature 1 discloses a blown film containing a poly(3-hydroxyalkanoate) resin as a main resin component.

Patent Literature 2 discloses forming a resin film using two poly(3-hydroxyalkanoate) resins having different melting temperatures that differ by 5°C or more. Patent Literature 2 discloses that the resin film can be produced by extrusion molding using a T-die.

### Citation List

### Patent Literature

PTL 1: Japanese Laid-Open Patent Application Publication No. 2022-37396
PTL 2: Japanese Laid-Open Patent Application Publication No. 2005-162884

### Summary of Invention

### Technical Problem

With the resin formulation described in Patent Literature 1 or 2, an extruded film containing a poly(3-hydroxyalkanoate) resin can be produced. However, poly(3-hydroxyalkanoate) resins tend to solidify slowly after melting, and film production using these resins often lacks sufficient productivity. In particular, it has been discovered that increasing the production speed tends to be difficult when extrusion molding using a T-die is carried out continuously.

In extrusion molding using a T-die, a molten resin material is extruded from the T-die onto a cast roll and cooled on the cast roll, thus being molded into a film. In this process, increasing the production speed in film molding is likely to cause the resin material containing a poly(3-hydroxyalkanoate) resin to stick to, and become inseparable, from the cast roll.

In particular, although Examples described in Patent Literature 1 employ pentaerythritol, which is known as a nucleating agent for poly(3-hydroxyalkanoate) resins, the use of a formulation that does not contain pentaerythritol results in slower solidification, leading to a marked decline in productivity.

In addition, changing the resin formulation to improve the solidification properties of the poly(3-hydroxyalkanoate) resin causes a reduction in stretchability, which leads to film breakage and hence failed stretching in the subsequent stretching step. Thus, it is difficult to achieve good stretchability while improving the productivity of film molding.

In view of the above circumstances, the present invention aims to provide a poly(3-hydroxyalkanoate) resin-containing extruded film that can be produced with high productivity.

### Solution to Problem

As a result of intensive studies with the goal of solving the above problem, the present inventors have found that when an extruded film is formed from a combination of a poly(3-hydroxyalkanoate) copolymer and a poly(3-hydroxybutyrate) resin, the resin material is less likely to stick to a cast roll, and the production speed in film molding can be significantly increased. Based on this finding, the inventors have completed the present invention.

Specifically, the present invention relates to an extruded film containing a poly(3-hydroxyalkanoate) copolymer (A) and a poly(3-hydroxybutyrate) (B).

### Advantageous Effects of Invention

The present invention can provide a poly(3-hydroxyalkanoate) resin-containing extruded film that can be produced with high productivity.

According to the present invention, a poly(3-hydroxyalkanoate) resin-containing extruded film having good physical properties such as high elongation and high strength can be produced continuously with high productivity.

According to a preferred aspect of the present invention, even when the resin material does not contain any sugar alcohol such as pentaerythritol, the resin material is less likely to stick to a cast roll, and the production speed in film molding can be significantly increased. This makes it possible to avoid the problem of bleed-out of a sugar alcohol from the film and the problem of soiling of the production equipment (in particular, the cast roll surface) due to bleed-out.

According to a preferred aspect of the present invention, a poly(3-hydroxyalkanoate) resin-containing extruded film can be produced continuously at a high production speed by a molding process in which a molten resin material is extruded from a T-die onto a cast roll.

A preferred aspect of the present invention can provide a poly(3-hydroxyalkanoate) resin-containing film that can be produced by film molding with high productivity and that can exhibit good stretchability. In addition, a poly(3-hydroxyalkanoate) resin-containing stretched film having good physical properties such as high elongation and high strength can be produced continuously with high productivity.

According to a preferred aspect of the present invention, a poly(3-hydroxyalkanoate) resin-containing stretched film can be produced continuously at a high production speed by performing a molding process in which a molten resin material is extruded from a T-die onto a cast roll and stretching the resulting film directly after the molding process.

### Description of Embodiments

Hereinafter, an embodiment of the present invention will be described. The present invention is not limited to the embodiment described below.

The present embodiment relates to an extruded film containing a poly(3-hydroxyalkanoate) copolymer (A) and a poly(3-hydroxybutyrate) (B).

### [Poly(3-Hydroxyalkanoate) Copolymer (A)]

The poly(3-hydroxyalkanoate) copolymer (A) may be a single poly(3-hydroxyalkanoate) copolymer or may be a mixture of two or more poly(3-hydroxyalkanoate) copolymers. To reliably ensure both high film productivity and good film physical properties and to further achieve good stretchability, the poly(3-hydroxyalkanoate) copolymer (A) preferably includes at least two poly(3-hydroxyalkanoate) copolymers differing in the types and/or proportions of the constituent monomers.

The poly(3-hydroxyalkanoate) copolymer (A) is preferably a polymer containing 3-hydroxyalkanoate units, in particular a polymer containing units represented by the following formula (1).

[-CHR-CH₂-CO-O-] (1)

In the formula (1), R is an alkyl group represented by CₚH₂ₚ₊₁, and p is an integer from 1 to 15. Examples of R include linear or branched alkyl groups such as methyl, ethyl, propyl, methylpropyl, butyl, isobutyl, t-butyl, pentyl, and hexyl groups. The integer p is preferably from 1 to 10 and more preferably from 1 to 8.

The poly(3-hydroxyalkanoate) copolymer (A) is particularly preferably a microbially produced poly(3-hydroxyalkanoate) copolymer. In the microbially produced poly(3-hydroxyalkanoate) copolymer, all of the 3-hydroxyalkanoate units are contained as (R)-3-hydroxyalkanoate units.

The poly(3-hydroxyalkanoate) copolymer (A) preferably contains 50 mol% or more, more preferably 60 mol% or more, even more preferably 70 mol% or more, of 3-hydroxyalkanoate units (in particular, the units represented by the formula (1)) in the total structural units. The poly(3-hydroxyalkanoate) copolymer (A) may contain only two or more types of 3-hydroxyalkanoate units as polymer structural units, or may contain other units (such as 4-hydroxyalkanoate units) in addition to one type or two or more types of 3-hydroxyalkanoate units.

The poly(3-hydroxyalkanoate) copolymer (A) is preferably a copolymer of 3-hydroxybutyrate (hereinafter also referred to as 3HB) units and other hydroxyalkanoate units. Such a copolymer is hereinafter also referred to as a "poly(3-hydroxybutyrate) copolymer". In this copolymer, all of the 3-hydroxybutyrate units are preferably (R)-3-hydroxybutyrate units.

Specific examples of poly(3-hydroxybutyrate) copolymers include poly(3-hydroxybutyrate-co-3-hydroxypropionate), poly(3-hydroxybutyrate-co-3-hydroxyvalerate) abbreviated as P3HB3HV, poly(3-hydroxybutyrate-co-3-hydroxyvalerate-co-3-hydroxyhexanoate), poly(3-hydroxybutyrate-co-3-hydroxyhexanoate) abbreviated as P3HB3HH, poly(3-hydroxybutyrate-co-3-hydroxyheptanoate), poly(3-hydroxybutyrate-co-3-hydroxyoctanoate), poly(3-hydroxybutyrate-co-3-hydroxynonanoate), poly(3-hydroxybutyrate-co-3-hydroxydecanoate), poly(3-hydroxybutyrate-co-3-hydroxyundecanoate), and poly(3-hydroxybutyrate-co-4-hydroxybutyrate) abbreviated as P3HB4HB. In particular, poly(3-hydroxybutyrate-co-3-hydroxyhexanoate) or poly(3-hydroxybutyrate-co-4-hydroxybutyrate) is preferred in terms of film productivity and film mechanical properties.

Poly(3-hydroxybutyrate-co-3-hydroxyhexanoate) is particularly preferred for the following reasons: its melting point and crystallinity can be changed by varying the proportions of the repeating units, and thus its physical properties such as Young's modulus and heat resistance can be changed and controlled to levels intermediate between those of polypropylene and polyethylene; and poly(3-hydroxybutyrate-co-3-hydroxyhexanoate) is a plastic that is easy to industrially produce and useful in terms of physical properties. Poly(3-hydroxybutyrate) copolymers are readily thermally decomposed under heating at 180°C or higher and, in particular, poly(3-hydroxybutyrate-co-3-hydroxyhexanoate) can have a low melting point and be moldable at low temperatures. Poly(3-hydroxybutyrate-co-3-hydroxyhexanoate) is preferred also in this respect.

Examples of commercially-available poly(3-hydroxybutyrate-co-3-hydroxyhexanoate) include "Kaneka Biodegradable Polymer Green Planet^{™}" of Kaneka Corporation.

When the poly(3-hydroxyalkanoate) copolymer (A) is a poly(3-hydroxybutyrate) copolymer, the average ratio between the 3-hydroxybutyrate units and the other hydroxyalkanoate units (3-hydroxybutyrate units/other hydroxyalkanoate units) in the total monomer units constituting the poly(3-hydroxyalkanoate) copolymer (A) is preferably from 99/1 to 80/20 (mol%/mol%), more preferably from 97/3 to 82/18 (mol%/mol%), and even more preferably from 95/5 to 85/15 (mol%/mol%) in order to ensure both good film physical properties and high film productivity.

The average ratio between different monomer units in the total monomer units constituting the poly(3-hydroxyalkanoate) copolymer (A) can be determined by a method known to those skilled in the art, such as the method described in paragraph [0047] of WO 2013/147139 A1. The "average ratio" refers to the molar ratio between different monomer units in the total monomer units constituting the poly(3-hydroxyalkanoate) copolymer (A). When the poly(3-hydroxyalkanoate) copolymer (A) is a mixture of two or more poly(3-hydroxyalkanoate) copolymers, the average ratio refers to the molar ratio between different monomer units contained in the total mixture.

As stated above, the poly(3-hydroxyalkanoate) copolymer (A) preferably includes at least two poly(3-hydroxyalkanoate) copolymers differing in the types and/or proportions of the constituent monomers. In this case, a combination of at least one high-crystallinity poly(3-hydroxyalkanoate) copolymer and at least one low-crystallinity poly(3-hydroxyalkanoate) copolymer can be used.

In general, high-crystallinity poly(3-hydroxyalkanoate) copolymers are superior in terms of productivity, but have low mechanical strength, while low-crystallinity poly(3-hydroxyalkanoate) copolymers have good mechanical properties although being inferior in terms of productivity. The combined use of high-crystallinity and low-crystallinity poly(3-hydroxyalkanoate) copolymers can lead to both high film productivity and good film physical properties. This combined use can also improve film stretchability.

The proportion of 3-hydroxybutyrate units in the high-crystallinity poly(3-hydroxyalkanoate) copolymer is preferably higher than the average proportion of 3-hydroxybutyrate units in the total monomer units constituting the poly(3-hydroxyalkanoate) copolymer (A). The proportion of 3-hydroxybutyrate units in the low-crystallinity poly(3-hydroxyalkanoate) copolymer is preferably lower than the average proportion of 3-hydroxybutyrate units in the total monomer units constituting the poly(3-hydroxyalkanoate) copolymer (A).

The method for obtaining a blend of two or more poly(3-hydroxyalkanoate) copolymers is not limited to a particular technique. A blend of two or more poly(3-hydroxyalkanoate) copolymers may be obtained by microbial production or chemical synthesis. Alternatively, a blend of two or more copolymers may be obtained by melting and kneading the copolymers using a device such as an extruder, a kneader, a Banbury mixer, or a roll mill, or may be obtained by dissolving and mixing the copolymers in a solvent and drying the resulting mixture.

The weight-average molecular weight of the total poly(3-hydroxyalkanoate) copolymer (A) is not limited to a particular range, but is preferably from 20 × 10⁴ to 200 × 10⁴, more preferably from 30 × 10⁴ to 150 × 10⁴, and even more preferably from 40 × 10⁴ to 100 × 10⁴ in order to ensure both good film physical properties and high film productivity.

The weight-average molecular weight of a poly(3-hydroxyalkanoate) copolymer can be measured as a polystyrene-equivalent molecular weight by gel permeation chromatography (HPLC GPC system manufactured by Shimadzu Corporation) using a chloroform solution of the copolymer. The columns used in the gel permeation chromatography may be any columns suitable for weight-average molecular weight measurement. The weight-average molecular weight of each of the poly(3-hydroxyalkanoate) copolymers described later can be measured in the same way.

The method for producing poly(3-hydroxyalkanoate) copolymers is not limited to a particular technique, and may be a production method using chemical synthesis or a microbial production method. A microbial production method is preferred. The microbial production method used can be any known method. Known examples of bacteria that produce copolymers of 3-hydroxybutyrate with other hydroxyalkanoates include *Aeromonas caviae* which is a P3HB3HV- and P3HB3HH-producing bacterium and *Alcaligenes eutrophus* which is a P3HB4HB-producing bacterium. In particular, in order to increase the P3HB3HH productivity, *Alcaligenes eutrophus* AC32 (FERM BP-6038; see T. Fukui, Y. Doi, J. Bacteriol., 179, pp. 4821-4830 (1997)) incorporating a P3HA synthase gene is more preferred. Such a microorganism is cultured under suitable conditions to allow the microorganism to accumulate P3HB3HH in its cells, and the microbial cells accumulating P3HB3HH are used. Instead of the above microorganisms, a genetically modified microorganism incorporating any suitable poly(3-hydroxyalkanoate) copolymer synthesis-related gene may be used depending on the poly(3-hydroxyalkanoate) copolymer to be produced. The culture conditions including the type of the substrate may be optimized depending on the poly(3-hydroxyalkanoate) copolymer to be produced.

An unmodified poly(3-hydroxyalkanoate) copolymer can be used as the poly(3-hydroxyalkanoate) copolymer (A). Alternatively, a copolymer obtained by modifying an unmodified poly(3-hydroxyalkanoate) copolymer with a copolymer-reactive material such as a peroxide (hereinafter referred to as a "modifying material") may be used. In the first and third aspects described later, it is preferable to use an unmodified copolymer. In the second aspect, the use of a modified copolymer is preferred.

When a modified copolymer is used as a film raw material, the modified copolymer may be first obtained through reaction of a copolymer and a modifying material and then molded into a film. Alternatively, a copolymer may be mixed with a modifying material, and they may be reacted during film molding. When a copolymer is reacted with a modifying material, all of the copolymer may be reacted at once with the modifying material. Alternatively, part of the copolymer may be reacted with the modifying material to obtain a modified copolymer, and then the rest of the unmodified copolymer may be added to the modified copolymer.

The modifying material is not limited to a particular compound, and may be any compound reactive with poly(3-hydroxyalkanoate) copolymers. In terms of handleability and ease of control of the reaction with poly(3-hydroxyalkanoate) copolymers, the use of an organic peroxide is preferred. The organic compound used may be any suitable one of the compounds described later.

Hereinafter, specific aspects of the poly(3-hydroxyalkanoate) copolymer (A) will be described individually.

### (First Aspect of Copolymer (A))

In the first aspect, the poly(3-hydroxyalkanoate) copolymer (A) contains at least a copolymer (A-1) that contains 3-hydroxybutyrate units and other hydroxyalkanoate units and in which the proportion of the other hydroxyalkanoate units is 24 mol% or more. The use of such a copolymer (A-1), which contains a high proportion of the other hydroxyalkanoate units and has low crystallinity, in combination with the poly(3-hydroxybutyrate) (B) described later makes it possible to produce a poly(3-hydroxyalkanoate) resin-containing extruded film having good physical properties such as high elongation and high strength (in particular, high elongation) with high productivity.

In the first aspect, the poly(3-hydroxyalkanoate) copolymer (A) preferably further contains, in addition to the copolymer (A-1), a copolymer (A-2) that contains 3-hydroxybutyrate units and other hydroxyalkanoate units and in which the proportion of the other hydroxyalkanoate units is from 1 to less than 5 mol%. The use of the copolymer (A-2), which has higher crystallinity than the copolymer (A-1), in combination with the copolymer (A-1) can improve film productivity and film physical properties in a well-balanced manner.

In the copolymer (A-1), the proportion of the other hydroxyalkanoate units is preferably from 24 to 99 mol%, more preferably from 24 to 50 mol%, even more preferably from 24 to 35 mol%, and particularly preferably from 24 to 30 mol%.

In the copolymer (A-2), the proportion of the other hydroxyalkanoate units is preferably from 2 to 4 mol% and more preferably from 2 to 3 mol%.

Each of the copolymers (A-1) and (A-2) is preferably poly(3-hydroxybutyrate-co-3-hydroxyhexanoate) or poly(3-hydroxybutyrate-co-4-hydroxybutyrate), and particularly preferably poly(3-hydroxybutyrate-co-3-hydroxyhexanoate).

In order to ensure both good film physical properties and high film productivity, the weight-average molecular weight of each of the copolymers (A-1) and (A-2) is preferably from 20 × 10⁴ to 250 × 10⁴, more preferably from 22 × 10⁴ to 230 × 10⁴, and even more preferably from 25 × 10⁴ to 200 × 10⁴.

In the first aspect, in terms of the balance of film productivity and film physical properties and the increase in film elongation, the amount of the copolymer (A-1) is preferably from 5 to 85 wt% based on the total weight of the poly(3-hydroxyalkanoate) copolymer (A) and the poly(3-hydroxybutyrate) (B). In terms of elongation, the amount of the copolymer (A-1) is more preferably at least 15 wt%, even more preferably at least 20 wt%, and particularly preferably at least 25 wt%. In terms of film productivity, the amount of the copolymer (A-1) is more preferably up to 70 wt%, even more preferably up to 60 wt%, still more preferably up to 50 wt%, and particularly preferably up to 40 wt%.

When the copolymer (A) includes the copolymers (A-1) and (A-2), the weight ratio of the copolymer (A-1) to the copolymer (A-2) (A-1/A-2) is preferably from 20/80 to 80/20, more preferably from 30/70 to 70/30, and even more preferably from 40/60 to 60/40 in order to ensure both good film physical properties and high film productivity and to increase film elongation.

In the first aspect, the poly(3-hydroxyalkanoate) copolymer (A) preferably further contains, in addition to the copolymers (A-1) and (A-2), a copolymer (A-3) that contains 3-hydroxybutyrate units and other hydroxyalkanoate units and in which the proportion of the other hydroxyalkanoate units is from 5 to less than 24 mol%. The crystallinity of the copolymer (A-3) is intermediate between those of the copolymers (A-1) and (A-2). The use of such a copolymer (A-3) can improve film productivity and film physical properties in a well-balanced manner.

In the copolymer (A-3), the proportion of the other other hydroxyalkanoate units is preferably at least 6 mol%. The proportion is more preferably up to 20 mol%, even more preferably up to 15 mol%, and particularly preferably up to 10 mol%.

The copolymer (A-3) is preferably poly(3-hydroxybutyrate-co-3-hydroxyhexanoate) or poly(3-hydroxybutyrate-co-4-hydroxybutyrate), and particularly preferably poly(3-hydroxybutyrate-co-3-hydroxyhexanoate).

In order to ensure both good film physical properties and high film productivity, the weight-average molecular weight of the copolymer (A-3) is preferably from 20 × 10⁴ to 250 × 10⁴, more preferably from 25 × 10⁴ to 230 × 10⁴, and even more preferably from 30 × 10⁴ to 200 × 10⁴.

The amount of the copolymer (A-3) is preferably from 0 to 50 wt% based on the total weight of the poly(3-hydroxyalkanoate) copolymer (A) and the poly(3-hydroxybutyrate) (B) in order to ensure both good film physical properties and high film productivity. The amount of the copolymer (A-3) is preferably at least 10 wt% and more preferably at least 20 wt%. The amount of the copolymer (A-3) is more preferably up to 45 wt% and even more preferably up to 40 wt%.

In the first aspect, the weight-average molecular weight of the total poly(3-hydroxyalkanoate) copolymer (A) is not limited to a particular range, but is preferably from 20 × 10⁴ to 200 × 10⁴, more preferably from 30 × 10⁴ to 150 × 10⁴, and even more preferably from 40 × 10⁴ to 100 × 10⁴ in order to ensure both good film physical properties and high film productivity.

### (Second Aspect of Copolymer (A))

In the second aspect, the poly(3-hydroxyalkanoate) copolymer (A) contains a reaction product (A') of a poly(3-hydroxyalkanoate) copolymer and an organic peroxide. The reaction product is a modified resin in which a crosslinked structure has been introduced into the poly(3-hydroxyalkanoate) copolymer through reaction with the organic peroxide. The use of the poly(3-hydroxyalkanoate) copolymer having a crosslinked structure in combination with the poly(3-hydroxybutyrate) (B) allows for both high productivity in the production of the poly(3-hydroxyalkanoate) resin-containing extruded film and good stretchability of the film.

The poly(3-hydroxyalkanoate) copolymer to be reacted with the organic peroxide may be a single poly(3-hydroxyalkanoate) copolymer or may be a mixture of two or more poly(3-hydroxyalkanoate) copolymers. In order to ensure both high film productivity and good stretchability and to reliably achieve good film physical properties (such as high elongation and high strength), the poly(3-hydroxyalkanoate) copolymer preferably includes at least two poly(3-hydroxyalkanoate) copolymers differing in the types and/or proportions of the constituent monomers.

In the second aspect, the reaction product (A') preferably contains at least a reaction product of an organic peroxide and a copolymer (A-1) that contains 3-hydroxybutyrate units and other hydroxyalkanoate units and in which the proportion of the other hydroxyalkanoate units is 24 mol% or more. By reacting such a copolymer (A-1) containing a high proportion of the other hydroxyalkanoate units and having low crystallinity with an organic peroxide and using the resulting reaction product in combination with the poly(3-hydroxybutyrate) (B), it becomes easier to improve the productivity in the production of the poly(3-hydroxyalkanoate) resin-containing extruded film and the stretchability of the film in a well-balanced manner and to further achieve good film physical properties.

In the second aspect, the poly(3-hydroxyalkanoate) copolymer (A) preferably contains a copolymer (A-2) that contains 3-hydroxybutyrate units and other hydroxyalkanoate units and in which the proportion of the other hydroxyalkanoate units is from 1 to less than 5 mol%. The copolymer (A-2) may be the reaction product (A') of a copolymer and an organic peroxide or may be an unreacted copolymer, but is preferably the reaction product (A'). The use of the copolymer (A-2), which has higher crystallinity than the copolymer (A-1), makes it easier to improve film productivity and film stretchability in a well-balanced manner and to further achieve good film physical properties. In particular, the copolymer (A-2) is preferably used in combination with the copolymer (A-1).

In the copolymer (A-1), the proportion of the other hydroxyalkanoate units is preferably from 24 to 99 mol%, more preferably from 24 to 50 mol%, even more preferably from 24 to 35 mol%, and particularly preferably from 24 to 30 mol%.

In the copolymer (A-2), the proportion of the other hydroxyalkanoate units is preferably from 2 to 4 mol% and more preferably from 2 to 3 mol%.

Each of the copolymers (A-1) and (A-2) is preferably poly(3-hydroxybutyrate-co-3-hydroxyhexanoate) or poly(3-hydroxybutyrate-co-4-hydroxybutyrate), and particularly preferably poly(3-hydroxybutyrate-co-3-hydroxyhexanoate).

The weight-average molecular weight of each of the copolymers (A-1) and (A-2) is preferably from 20 × 10⁴ to 230 × 10⁴, more preferably from 22 × 10⁴ to 200 × 10⁴, and even more preferably from 25 × 10⁴ to 150 × 10⁴ in order to ensure both high film productivity and good film stretchability.

In the second aspect, in terms of the balance of film productivity and film stretchability and the increase in film elongation, the amount of the copolymer (A-1) is preferably from 5 to 60 wt% based on the total weight of the poly(3-hydroxyalkanoate) copolymer (A) and the poly(3-hydroxybutyrate) (B). In terms of film elongation, the amount of the copolymer (A-1) is more preferably at least 7 wt%, even more preferably at least 10 wt%, and particularly preferably at least 20 wt%. In terms of film productivity, the amount of the copolymer (A-1) is more preferably up to 50 wt% and even more preferably up to 40 wt%.

When the film contains the copolymers (A-1) and (A-2), the weight ratio of the copolymer (A-1) to the copolymer (A-2) (A-1/A-2) is preferably from 20/80 to 80/20, more preferably from 30/70 to 70/30, and even more preferably from 40/60 to 60/40 in order to ensure both high film productivity and good film stretchability and to increase film elongation.

In the second aspect, the poly(3-hydroxyalkanoate) copolymer (A) preferably contains a copolymer (A-3) that contains 3-hydroxybutyrate units and other hydroxyalkanoate units and in which the proportion of the other hydroxyalkanoate units is from 5 to less than 24 mol%. The copolymer (A-3) may be the reaction product (A') of a copolymer and an organic peroxide or may be an unreacted copolymer, but is preferably the reaction product (A'). The crystallinity of the copolymer (A-3) is intermediate between those of the copolymers (A-1) and (A-2). The use of such a copolymer (A-3) makes it easier to improve film productivity and film stretchability in a well-balanced manner and to further achieve good film physical properties. In particular, the copolymer (A-3) is preferably used in combination with the copolymer (A-1) and/or the copolymer (A-2).

In the copolymer (A-3), the proportion of the other hydroxyalkanoate units is preferably at least 6 mol%. The proportion of the other hydroxyalkanoate units is more preferably up to 20 mol%, even more preferably up to 15 mol%, and particularly preferably up to 10 mol%.

The copolymer (A-3) is preferably poly(3-hydroxybutyrate-co-3-hydroxyhexanoate) or poly(3-hydroxybutyrate-co-4-hydroxybutyrate), and particularly preferably poly(3-hydroxybutyrate-co-3-hydroxyhexanoate).

The weight-average molecular weight of the copolymer (A-3) is preferably from 20 × 10⁴ to 250 × 10⁴, more preferably from 25 × 10⁴ to 230 × 10⁴, and even more preferably from 30 × 10⁴ to 200 × 10⁴ in order to ensure both high film productivity and good film stretchability.

The amount of the copolymer (A-3) is preferably from 0 to 85 wt% based on the total weight of the poly(3-hydroxyalkanoate) copolymer (A) and the poly(3-hydroxybutyrate) (B) in order to ensure both high film productivity and good film stretchability and achieve good film physical properties. The amount of the copolymer (A-3) is preferably at least 5 wt%, more preferably at least 10 wt%, even more preferably at least 20 wt%, still more preferably at least 30 wt%, and particularly preferably at least 40 wt%. The amount of the copolymer (A-3) is more preferably up to 80 wt% and even more preferably up to 75 wt%.

In the second aspect, the weight-average molecular weight of the total poly(3-hydroxyalkanoate) copolymer (A) is not limited to a particular range, but is preferably from 20 × 10⁴ to 200 × 10⁴, more preferably from 30 × 10⁴ to 150 × 10⁴, and even more preferably from 40 × 10⁴ to 100 × 10⁴ in order to ensure both high film productivity and good film stretchability. It should be noted that the weight-average molecular weight described herein is that measured for the copolymer that has not yet been reacted with any organic peroxide.

### [Organic Peroxide]

Introducing a crosslinked structure into a poly(3-hydroxyalkanoate) copolymer through reaction with an organic peroxide makes the resulting film resistant to breakage during stretching, thereby enabling the formation of a film with good stretchability.

Examples of the organic peroxide include, but are not limited to, diisobutyl peroxide, cumyl peroxyneodecanoate, di-*n*-propyl peroxydicarbonate, diisopropyl peroxydicarbonate, di-sec-butyl peroxydicarbonate, 1,1,3,3-tetramethylbutyl peroxyneodecanoate, bis(4-*t-*butylcyclohexyl) peroxydicarbonate, bis(2-ethylhexyl) peroxydicarbonate, *t*-hexyl peroxyneodecanoate, *t*-butyl peroxyneodecanoate, *t*-butyl peroxyneoheptanoate, *t*-hexyl peroxypivalate, *t*-butyl peroxypivalate, di(3,5,5-trimethylhexanoyl) peroxide, dilauroyl peroxide, 1,1,3,3-tetramethylbutyl peroxy-2-ethylhexanoate, disuccinic acid peroxide, 2,5-dimethyl-2,5-bis(2-ethylhexanoylperoxy)hexane, *t*-hexyl peroxy-2-ethylhexanoate, di(4-methylbenzoyl) peroxide, dibenzoyl peroxide, *t*-butylperoxy-2-ethylhexyl carbonate, *t*-butylperoxyisopropyl carbonate, 1,6-bis(*t*-butylperoxycarbonyloxy)hexane, *t*-butyl peroxy-3,5,5-trimethylhexanoate, *t-*butyl peroxyacetate, *t*-butyl peroxybenzoate, *t*-amyl peroxy-3,5,5-trimethylhexanoate, 2,2-bis(4,4-di-*t*-butylperoxycyclohexyl)propane, and 2,2-di-*t*-butylperoxybutane. Among these, dibenzoyl peroxide, *t*-butylperoxy-2-ethylhexyl carbonate, and *t*-butylperoxyisopropyl carbonate are preferred. One organic peroxide may be used alone, or two or more organic peroxides may be used in combination.

The organic peroxide used may be in any form such as a solid or a liquid, and may be a liquid diluted with a diluent or the like. An organic peroxide miscible with poly(3-hydroxyalkanoate) copolymers (in particular, an organic peroxide that is liquid at room temperature (25°C)) is preferred because such an organic peroxide can be uniformly dispersed in a poly(3-hydroxyalkanoate) copolymer and the use of the organic peroxide makes it easier to prevent a local modification reaction.

In order to enhance film stretchability, the amount of the organic peroxide used is preferably from 0.01 to 3 parts by weight per 100 parts by weight of the poly(3-hydroxyalkanoate) copolymer to be reacted with the organic peroxide. The amount of the organic peroxide is more preferably from 0.03 to 2 parts by weight, even more preferably from 0.05 to 1 parts by weight, and particularly preferably from 0.1 to 0.5 parts by weight.

The reaction product (A') of a poly(3-hydroxyalkanoate) copolymer and an organic peroxide can be suitably obtained by placing the poly(3-hydroxyalkanoate) copolymer and the organic peroxide into an extruder and melting and kneading them together in the extruder. This allows the poly(3-hydroxyalkanoate) copolymer to be crosslinked uniformly. Other components such as a nucleating agent and a lubricant, which will be described later, may be placed into the extruder in addition to the poly(3-hydroxyalkanoate) copolymer and the organic peroxide, and the copolymer, the organic peroxide, and the other components may be melted and kneaded together. In the melting and kneading, the poly(3-hydroxybutyrate) (B) may also be added to the extruder.

The melting and kneading can be accomplished according to a known or conventional method. For example, the melting and kneading can be carried out using a device such as an extruder (a single-screw or twin-screw extruder) or a kneader. The conditions of the melting and kneading are not limited to particular details and can be set as appropriate. Preferably, the resin temperature and the residence time are set such that the reaction with the organic peroxide can be completed during the melting and kneading. Specifically, the resin temperature as measured by a thermometer on the die is preferably in the range of 130 to 190°C during the melting and kneading. The residence time in the extruder during the melting and kneading is preferably from 60 to 300 seconds.

After the melting and kneading, the resin material may be extruded as a strand, and the strand may be cut to obtain pellets in the form of particles of cylindrical shape, elliptic cylindrical shape, spherical shape, cubic shape, or rectangular parallelepiped shape. It is desirable that the pellets thus produced be thoroughly dried at 40 to 80°C to remove water before use. The pelletizing step may be skipped, and the melting and kneading may be immediately followed by a film molding step.

### (Third Aspect of Copolymer (A))

In the third aspect, the poly(3-hydroxyalkanoate) copolymer (A) contains a copolymer (A-3') that contains 3-hydroxybutyrate units and other hydroxyalkanoate units, in which the proportion of the other hydroxyalkanoate units is from 5 to less than 24 mol%, and that has a weight-average molecular weight of 70 × 10⁴ or more. The use of such a copolymer (A-3'), which has a moderate level of crystallinity and has a high molecular weight, in combination with the poly(3-hydroxybutyrate) (B) can enhance the stretchability of the poly(3-hydroxyalkanoate) resin-containing extruded film.

In the copolymer (A-3'), the proportion of the other hydroxyalkanoate units is from 5 to less than 24 mol%, preferably at least 6 mol%, more preferably at least 8 mol%, and even more preferably at least 10 mol%. The proportion of the other hydroxyalkanoate units is preferably up to 20 mol%, more preferably up to 17 mol%, and even more preferably up to 14 mol%.

The copolymer (A-3') is preferably poly(3-hydroxybutyrate-co-3-hydroxyhexanoate) or poly(3-hydroxybutyrate-co-4-hydroxybutyrate), and particularly preferably poly(3-hydroxybutyrate-co-3-hydroxyhexanoate).

The weight-average molecular weight of the copolymer (A-3') is 70 × 10⁴ or more, and preferably 75 × 10⁴ or more. The upper limit of the weight-average molecular weight is not limited to a particular value. In terms of productivity, the weight-average molecular weight is preferably up to 200 × 10⁴, more preferably up to 150 × 10⁴, and even more preferably up to 100 × 10⁴.

In the third aspect, the amount of the copolymer (A-3') is from 20 to 80 wt% based on the total weight of the poly(3-hydroxyalkanoate) copolymer (A) and the poly(3-hydroxybutyrate) (B) in order to ensure a good balance of film stretchability, film productivity, and film strength. Thanks to this limitation on the amount of the copolymer (A-3'), an extruded film can be produced with high productivity while the stretchability-improving effect is obtained by incorporation of the copolymer (A-3'). In terms of film stretchability, the amount of the copolymer (A-3') is preferably at least 30 wt%, more preferably at least 40 wt%, even more preferably at least 45 wt%, still more preferably at least 50 wt%, particularly preferably at least 60 wt%, and most preferably at least 70 wt%. In terms of film productivity and film stretchability, the amount of the copolymer (A-3') is preferably up to 75 wt% and more preferably up to 70 wt%.

In terms of stretchability, the copolymer (A-3') preferably includes: a copolymer (A-3'-1) that contains 3-hydroxybutyrate units and other hydroxyalkanoate units, in which the proportion of the other hydroxyalkanoate units is from 5 to less than 10 mol%, and that has a weight-average molecular weight of 70 × 10⁴ or more; and a copolymer (A-3'-2) that contains 3-hydroxybutyrate units and other hydroxyalkanoate units, in which the proportion of the other hydroxyalkanoate units is from 10 to less than 24 mol%, and that has a weight-average molecular weight of 70 × 10⁴ or more. In this case, in terms of stretchability, the proportion of the copolymer (A-3'-2) to the total amount of the copolymers (A-3'-1) and (A-3'-2) is preferably from 30 to 90 wt%, more preferably from 50 to 85 wt%, and even more preferably from 60 to 83 wt%.

In the third aspect, the poly(3-hydroxyalkanoate) copolymer (A) may further contain a copolymer (A-3") that contains 3-hydroxybutyrate units and other hydroxyalkanoate units, in which the proportion of the other hydroxyalkanoate units is from 5 to less than 24 mol%, and that has a weight-average molecular weight of less than 70 × 10⁴.

In the copolymer (A-3"), the proportion of the other hydroxyalkanoate units is from 5 to less than 24 mol%, preferably at least 6 mol%, more preferably at least 8 mol%, and even more preferably at least 10 mol%. The proportion of the other hydroxyalkanoate units is preferably up to 20 mol%, more preferably up to 17 mol%, and even more preferably up to 14 mol%.

The copolymer (A-3") is preferably poly(3-hydroxybutyrate-co-3-hydroxyhexanoate) or poly(3-hydroxybutyrate-co-4-hydroxybutyrate), and particularly preferably poly(3-hydroxybutyrate-co-3-hydroxyhexanoate).

The weight-average molecular weight of the copolymer (A-3") is less than 70 × 10⁴. In terms of film productivity, the weight-average molecular weight is preferably 60 × 10⁴ or less and more preferably 50 × 10⁴ or less. The lower limit of the weight-average molecular weight is not limited to a particular value. In terms of film physical properties, the weight-average molecular weight is preferably at least 20 × 10⁴ and more preferably at least 30 × 10⁴.

The copolymer (A) may consist solely of the copolymer (A-3') or may consist solely of the copolymers (A-3') and (A-3"). Alternatively, the copolymer (A) may further contain a poly(3-hydroxyalkanoate) copolymer corresponding neither to the copolymer (A-3') nor to the copolymer (A-3"). Examples of such a poly(3-hydroxyalkanoate) copolymer include: the copolymer (A-2) that contains 3-hydroxybutyrate units and other hydroxyalkanoate units and in which the proportion of the other hydroxyalkanoate units is from 1 to less than 5 mol%; and the copolymer (A-1) that contains 3-hydroxybutyrate units and other hydroxyalkanoate units and in which the proportion of the other hydroxyalkanoate units is 24 mol% or more.

The amount of the copolymer (A-3'), or the total amount of the copolymers (A-3') and (A-3") when the copolymer (A) contains the copolymer (A-3"), is, for example, preferably from 70 to 100 wt%, more preferably from 80 to 100 wt%, and even more preferably from 90 to 100 wt% based on the total amount of the copolymer (A).

In the third aspect, the weight-average molecular weight of the total poly(3-hydroxyalkanoate) copolymer (A) is not limited to a particular range. In terms of film stretchability, the weight-average molecular weight is preferably from 50 × 10⁴ to 200 × 10⁴, more preferably from 60 × 10⁴ to 150 × 10⁴, and even more preferably from 70 × 10⁴ to 100 × 10⁴.

### [Poly(3-Hydroxybutyrate) (B)]

The extruded film according to the present embodiment contains a poly(3-hydroxybutyrate) (B). The poly(3-hydroxybutyrate) (B) exhibits higher crystallinity and solidifies more readily than the poly(3-hydroxyalkanoate) copolymer (A). Accordingly, when a molten resin material containing the poly(3-hydroxybutyrate) (B) is cooled on a cast roll, the poly(3-hydroxybutyrate) (B) solidifies rapidly, reducing the tendency of the resin material as a whole to stick to the cast roll. As a result, the productivity in the production of the poly(3-hydroxyalkanoate) resin-containing extruded film can be improved.

The poly(3-hydroxybutyrate) (B) refers to a homopolymer of 3-hydroxybutyrate or a polymer containing 3-hydroxybutyrate units and a small amount of hydroxyalkanoate units other than 3-hydroxybutyrate units. To be specific, the proportion of 3-hydroxybutyrate units in the total constituent monomers of the poly(3-hydroxybutyrate) (B) is preferably from more than 99 to 100 mol%.

The hydroxyalkanoate units other than 3-hydroxybutyrate units that may be contained in the poly(3-hydroxybutyrate) (B) are not limited to a particular type, and may be any hydroxyalkanoates units copolymerizable with 3-hydroxybutyrate units. Examples of the other hydroxyalkanoate units include 3-hydroxyalkanoate units other than 3-hydroxybutyrate units and hydroxyalkanoate units other than 3-hydroxyalkanoate units (such as 4-hydroxyalkanoate units). Among these, 3-hydroxyhexanoate units are preferred.

The weight-average molecular weight of the poly(3-hydroxybutyrate) (B) is not limited to a particular range. In order to improve film productivity, the weight-average molecular weight is preferably from 20 × 10⁴ to 200 × 10⁴ and more preferably from 30 × 10⁴ to 150 × 10⁴. The weight-average molecular weight is even more preferably up to 100 × 10⁴ and particularly preferably up to 50 × 10⁴. The weight-average molecular weight can be measured by the method described above.

The poly(3-hydroxybutyrate) (B) may be an unmodified resin or may be a modified resin obtained through reaction with an organic peroxide. The type and amount of the organic peroxide to be used, and the method of modification, are the same as those described above for the second aspect of the poly(3-hydroxyalkanoate) copolymer (A), and will therefore not be described below.

When the extruded film according to the present embodiment contains a modified poly(3-hydroxybutyrate) (B), modification of the poly(3-hydroxyalkanoate) copolymer (A) and modification of the poly(3-hydroxybutyrate) (B) may be carried out separately, and the resulting modified resins may then be mixed. Alternatively, the poly(3-hydroxyalkanoate) copolymer (A) and the poly(3-hydroxybutyrate) (B) may be mixed before modification, and subsequently they may be modified together.

The amount of the poly(3-hydroxybutyrate) (B) in the extruded film according to the present embodiment is preferably from 2 to 75 wt% based on the total weight of the poly(3-hydroxyalkanoate) copolymer (A) and the poly(3-hydroxybutyrate) (B) in order to ensure both high film productivity and good film physical properties. In order to improve productivity, the amount of the poly(3-hydroxybutyrate) (B) is more preferably at least 3 wt%, even more preferably at least 10 wt%, and particularly preferably at least 15 wt%. In terms of film physical properties, the amount of the poly(3-hydroxybutyrate) (B) is more preferably up to 70 wt%, even more preferably up to 60 wt%, still more preferably up to 50 wt%, particularly preferably up to 40 wt%, and most preferably up to 30 wt%.

Particularly in the second and third aspects, the amount of the poly(3-hydroxybutyrate) (B) is preferably from 5 to 60 wt% based on the total weight of the poly(3-hydroxyalkanoate) copolymer (A) and the poly(3-hydroxybutyrate) (B) in order to ensure both high film productivity and good film stretchability. In order to improve film productivity, the amount of the poly(3-hydroxybutyrate) (B) is more preferably at least 10 wt% and even more preferably at least 12 wt%. In terms of film physical properties, the amount of the poly(3-hydroxybutyrate) (B) is more preferably up to 50 wt%, even more preferably up to 40 wt%, still more preferably up to 30 wt%, particularly preferably up to 25 wt%, and most preferably up to 20 wt%.

The extruded film according to the present embodiment is a resin film composed principally of the poly(3-hydroxyalkanoate) copolymer (A) and the poly(3-hydroxybutyrate) (B). The total proportion of the poly(3-hydroxyalkanoate) copolymer (A) and the poly(3-hydroxybutyrate) (B) in the total weight of the extruded film may be 50 wt% or more, and is preferably 70 wt% or more, more preferably 80 wt% or more, and even more preferably 90 wt% or more. The total proportion may be 95 wt% or more and may be 98 wt% or more.

### (Additional Resin)

The extruded film according to the present embodiment may contain an additional resin other than the poly(3-hydroxyalkanoate) copolymer (A) and the poly(3-hydroxybutyrate) (B), to the extent that the additional resin does not diminish the effect of the invention. Examples of such additional resins include: aliphatic polyester resins such as polylactic acid, polybutylene succinate adipate, polybutylene succinate, and polycaprolactone; and aliphaticaromatic polyester resins such as polybutylene adipate terephthalate, polybutylene sebacate terephthalate, and polybutylene azelate terephthalate. The extruded film may contain only one additional resin or may contain two or more additional resins.

The amount of the additional resin is not limited to a particular range, but is preferably 100 parts by weight or less, more preferably 50 parts by weight or less, and even more preferably 30 parts by weight or less per 100 parts by weight of the total amount of the poly(3-hydroxyalkanoate) copolymer (A) and the poly(3-hydroxybutyrate) (B). The amount of the additional resin may be 10 parts by weight or less, 5 parts by weight or less, or 1 part by weight or less. The amount of the additional resin may be, but is not limited to, at least 0 part by weight.

The extruded film according to the present embodiment may contain an additive that can be used with the poly(3-hydroxyalkanoate) copolymer (A) and the poly(3-hydroxybutyrate) (B), to the extent that the additive does not diminish the effect of the invention. Examples of such additives include: colorants such as pigments and dyes; odor absorbers such as activated carbon and zeolite; flavors such as vanillin and dextrin; and other additives such as fillers, plasticizers, oxidation inhibitors, antioxidants, weathering resistance improvers, ultraviolet absorbers, nucleating agents, lubricants, mold release agents, water-repellent agents, antimicrobial agents, and slidability improvers. The extruded film may contain only one additive or may contain two or more additives. The amounts of these additives can be set by those skilled in the art as appropriate depending on the intended purpose.

The following describes nucleating agents, lubricants, fillers, and plasticizers in detail.

### (Nucleating Agent)

The extruded film according to the present embodiment may contain a nucleating agent. Examples of nucleating agents include: sugar alcohols such as pentaerythritol, galactitol, and mannitol; talc; fatty acid amides; orotic acid; aspartame; cyanuric acid; glycine; zinc phenylphosphonate; and boron nitride. Among these, sugar alcohols are preferred because they are particularly superior in the accelerating effect on crystallization of the poly(3-hydroxyalkanoate) copolymer (A) and the poly(3-hydroxybutyrate) (B). Particularly preferred is pentaerythritol. One nucleating agent may be used, or two or more nucleating agents may be used. The proportions of the nucleating agents used can be adjusted as appropriate depending on the intended purpose.

When a nucleating agent is used, the amount of the nucleating agent is not limited to a particular range, but is preferably from 0.1 to 5 parts by weight, more preferably from 0.5 to 3 parts by weight, and even more preferably from 0.7 to 1.5 parts by weight per 100 parts by weight of the total amount of the poly(3-hydroxyalkanoate) copolymer (A) and the poly(3-hydroxybutyrate) (B).

However, the extruded film according to the present embodiment may be substantially free of any sugar alcohol such as pentaerythritol. The expression "substantially free of any sugar alcohol" means that the sugar alcohol amount is less than 0.1 parts by weight per 100 parts by weight of the total amount of the poly(3-hydroxyalkanoate) copolymer (A) and the poly(3-hydroxybutyrate) (B). The sugar alcohol amount may be less than 0.01 parts by weight. In an aspect in which the extruded film is substantially free of any sugar alcohol, bleed-out of a sugar alcohol from the film, and the concomitant soiling of the cast roll surface, can be avoided.

When the extruded film is substantially free of any sugar alcohol, the film preferably contains talc and/or a fatty acid amide as a nucleating agent, and particularly preferably contains both talc and a fatty acid amide. The use of these nucleating agents in combination with the poly(3-hydroxybutyrate) (B) can improve the productivity in extruded film production even when the extruded film is substantially free of any sugar alcohol. In addition, the combined use can prevent blocking, a phenomenon in which different portions of the extruded film stick together after winding of the film.

Specific examples of fatty acid amides are described in detail below as lubricants. A fatty acid amide contained in the extruded film according to the present embodiment can function both as a nucleating agent and as a lubricant.

### (Lubricant)

The extruded film according to the present embodiment may contain a lubricant. Examples of lubricants include behenamide, oleamide, erucamide, stearamide, palmitamide, *N-*stearyl behenamide, *N*-stearyl erucamide, ethylene bis(stearamide), ethylene bis(oleamide), ethylene bis(erucamide), ethylene bis(lauramide), ethylene bis(capramide), *p*-phenylene bis(stearamide), and a polycondensation product of ethylenediamine, stearic acid, and sebacic acid. Among these, behenamide and erucamide are preferred because they are particularly superior in the lubricating effect on the poly(3-hydroxyalkanoate) copolymer (A) and the poly(3-hydroxybutyrate) (B). One lubricant may be used, or two or more lubricants may be used. The proportions of the lubricants used can be adjusted as appropriate depending on the intended purpose.

When a lubricant is used, the amount of the lubricant is not limited to a particular range, but is preferably from 0.01 to 5 parts by weight, more preferably from 0.05 to 3 parts by weight, and even more preferably from 0.1 to 1.5 parts by weight per 100 parts by weight of the total amount of the poly(3-hydroxyalkanoate) copolymer (A) and the poly(3-hydroxybutyrate) (B). The extruded film according to the present embodiment preferably contains a lubricant, but may contain no lubricant.

### (Filler)

The extruded film according to the present embodiment may contain a filler. The inclusion of a filler allows the film to have higher strength. The filler may be an inorganic filler, an organic filler, or a combination of both. Examples of inorganic fillers include, but are not limited to, talc, silicate salts, carbonate salts, sulfate salts, phosphate salts, oxides, hydroxides, nitrides, and carbon black. One inorganic filler may be used alone, or two or more inorganic fillers may be used in combination.

When a filler is used, the amount of the filler is not limited to a particular range, but is preferably from 0.5 to 100 parts by weight, more preferably from 1 to 80 parts by weight, even more preferably from 3 to 70 parts by weight, and still more preferably from 5 to 60 parts by weight per 100 parts by weight of the total amount of the poly(3-hydroxyalkanoate) copolymer (A) and the poly(3-hydroxybutyrate) (B). However, the extruded film according to the present embodiment may be substantially free of any filler. The expression "substantially free of any filler" means that the filler amount is less than 0.5 parts by weight per 100 parts by weight of the total amount of the poly(3-hydroxyalkanoate) copolymer (A) and the poly(3-hydroxybutyrate) (B). The filler amount may be less than 0.1 parts by weight.

### (Plasticizer)

The extruded film according to the present embodiment may contain a plasticizer. Examples of plasticizers include glycerin ester compounds, citric ester compounds, sebacic ester compounds, adipic ester compounds, polyether ester compounds, benzoic ester compounds, phthalic ester compounds, isosorbide ester compounds, polycaprolactone compounds, and dibasic ester compounds. Among these, glycerin ester compounds, citric ester compounds, sebacic ester compounds, and dibasic ester compounds are preferred because they are particularly superior in the plasticizing effect on the poly(3-hydroxyalkanoate) copolymer (A). Examples of glycerin ester compounds include glycerin diacetomonolaurate. Examples of citric ester compounds include tributyl acetylcitrate. Examples of sebacic ester compounds include dibutyl sebacate. Examples of dibasic ester compounds include benzyl methyl diethylene glycol adipate. One plasticizer may be used, or two or more plasticizers may be used. The proportions of the plasticizers used can be adjusted as appropriate depending on the intended purpose.

When a plasticizer is used, the amount of the plasticizer is not limited to a particular range, but is preferably from 1 to 20 parts by weight, more preferably from 2 to 15 parts by weight, and even more preferably from 3 to 10 parts by weight per 100 parts by weight of the total amount of the poly(3-hydroxyalkanoate) copolymer (A) and the poly(3-hydroxybutyrate) (B). However, the extruded film according to the present embodiment may be substantially free of any plasticizer. The expression "substantially free of any plasticizer" means that the plasticizer amount is less than 1 part by weight per 100 parts by weight of the total amount of the poly(3-hydroxyalkanoate) copolymer (A) and the poly(3-hydroxybutyrate) (B). The plasticizer amount may be less than 0.1 parts by weight.

### [Extruded Film]

The term "extruded film" as used herein refers to a film produced by extrusion molding.

The extruded film according to the present embodiment may be an unstretched film that has not undergone stretching, or may be a stretched film that has been stretched in the MD direction and/or the TD direction after film molding. The term "extruded film" as used herein is intended to encompass both unstretched films and stretched films. In terms of strength, the extruded film is preferably a stretched film. In particular, according to the second and third aspects, a stretched film can be produced with high productivity.

In terms of thickness uniformity, appearance, strength, and low weight, the thickness of the extruded film according to the present embodiment is preferably from 10 to 200 µm, more preferably from 15 to 150 µm, and even more preferably from 20 to 100 µm.

The extruded film according to the present embodiment is preferably an industrially produced long film, and particularly preferably a strip-shaped film wound in a roll. The length of such a film is not limited to a particular range, and may be, for example, 5000 m or more and may be 10000 m or more. According to the present embodiment, such a long film can be produced continuously and stably.

### [Method for Producing Extruded Film]

Hereinafter, one example of a method for producing the extruded film according to the present embodiment will be described. The present invention is not limited by the following description.

The extruded film can be produced by melting a film raw material containing the poly(3-hydroxyalkanoate) copolymer (A), the poly(3-hydroxybutyrate) (B), and optionally other components, and extruding the molten film raw material. That is, the film can be produced by extrusion molding.

Extrusion molding allows a film with a uniform thickness to be produced easily and continuously. The extrusion molding can be carried out using any suitable means such as a single-screw or twin-screw extruder.

Examples of extrusion molding methods include: T-die extrusion in which a molten raw material is extruded as a flat film from a T-die; and blown film extrusion in which a molten resin is extruded from a ring-shaped die, and gas is injected into the extruded resin to inflate it into the shape of a bag. In particular, a film produced by extrusion molding using a T-die is referred to as a T-die film. The present invention is suitably applicable to T-die film production. The following describes T-die film production in detail.

The film raw material may be melted under any conditions under which the poly(3-hydroxyalkanoate) copolymer (A) and the poly(3-hydroxybutyrate) (B) are melted. The temperature of the molten film raw material may be, for example, from about 140 to about 210°C.

Next, the molten film raw material is extruded onto a cast roll to mold the material into a film. The melt of the film raw material comes into contact with the cast roll and moves along the surface of the cast roll, thus becoming cooled and solidified.

This step may involve extruding the melt onto a single cast roll or onto a plurality of cast rolls, or may involve placing a touch roll facing a cast roll and pressing the melt extruded onto the cast roll between the touch roll and the cast roll.

An air knife or an air chamber may be used to ensure stable contact of the melt with the cast roll. The cast roll may be placed in a water bath, or an air chamber may be used, to efficiently cool the side of the melt opposite to the side in contact with the cast roll.

The set temperature of the cast roll is preferably at least 0°C, more preferably at least 10°C, and even more preferably at least 15°C in order to minimize the adhesiveness of the poly(3-hydroxyalkanoate) resin (A) and improve the separability of the film from the cast roll. The set temperature of the cast roll is preferably higher than a temperature that is 10°C above the glass transition temperature (Tg) of the poly(3-hydroxyalkanoate) copolymer (A).

The upper limit of the set temperature of the cast roll is not limited to a particular value. In order to accelerate the solidification of the poly(3-hydroxyalkanoate) copolymer (A), the set temperature of the cast roll is preferably up to 80°C and more preferably up to 60°C.

Next, the film cooled on the cast roll is transferred along with rotation of the cast roll, thereby separating the film from the cast roll. As a result, an unstretched film can be obtained.

The obtained film may be subsequently stretched in the MD direction to obtain a uniaxially stretched film having high strength in the MD direction. The MD direction is also referred to as the machine direction, flow direction, or longitudinal direction. The TD direction described later is a direction perpendicular to the MD direction, and is also referred to as the transverse direction or width direction.

The MD-direction stretching step can be performed directly after the separation from the cast roll on the same production line. This step is not limited to using a particular technique, and can be performed, for example, by using a roll longitudinal stretching machine including a plurality of rolls on which the film is transferred and by operating the plurality of rolls at different rotational speeds.

For this stretching step, it is desirable to soften the film material sufficiently for stretching. Thus, the MD-direction stretching is desirably carried out while the film is heated to a temperature near the melting point of the poly(3-hydroxyalkanoate) resin. Specifically, the heating temperature is preferably 70°C or higher, more preferably 90°C or higher, and even more preferably 100°C or higher. When the poly(3-hydroxyalkanoate) copolymer used is the reaction product (A') obtained through reaction with an organic peroxide or the high-molecular-weight copolymer (A-3'), the film resists breakage during stretching even at such elevated temperatures, and can be stretched at a high stretch ratio. The heating temperature is preferably below the melting point of the poly(3-hydroxyalkanoate) resin.

Examples of heating techniques include, but are not limited to: a technique in which an air stream adjusted to a given temperature is applied to the film; a technique in which the film temperature is controlled by setting rolls to a given temperature; a technique in which the film temperature is controlled to a given temperature by heating the film using auxiliary heating means such as an IR heater; and a technique in which the film is passed through an oven adjusted to a given temperature. One of these techniques may be used alone, or two or more thereof may be used in combination.

The stretch ratio in the MD direction is not limited to a particular range, but is desirably 1.5 or more to increase the strength and elongation of the film. The stretch ratio is preferably 2 or more and more preferably 2.5 or more. Such high stretch ratios can be achieved by using the reaction product (A') of a poly(3-hydroxyalkanoate) copolymer and an organic peroxide or by using the poly(3-hydroxyalkanoate) copolymer (A-3') having a high molecular weight. The stretch ratio is typically up to 8 and may be up to 6.

The MD-direction stretching may be followed by stretching in the TD direction to obtain a biaxially-stretched film having high strength in both the MD and TD directions. The TD-direction stretching step can be carried out directly after the MD-direction stretching step on the same production line. This step is not limited to using a particular technique, and can be performed, for example, by using a transverse stretching machine such as a clip tenter to clamp the film at both width ends and pull the clamped film in the TD direction.

The film is preferably heated also during the TD-direction stretching step. The heating is not limited to using a particular technique, and any of the heating techniques described above for the MD-direction stretching step may be used.

The temperature during the TD-direction stretching step may be the same as the temperature during the MD-direction stretching described above. The temperature is preferably from 35 to 150°C, more preferably from 45 to 140°C, and even more preferably from 55 to 130°C.

The stretch ratio in the TD direction is not limited to a particular range, but is desirably 1.5 or more to increase the strength and elongation of the film in the TD direction. The stretch ratio is preferably 2 or more and more preferably 2.5 or more. The stretch ratio is typically up to 8 and may be up to 6.

After the MD-direction or TD-direction stretching step, it is preferable to perform a heat setting step in which the stretched film is heated to a temperature that allows high-melting-point crystals to grow. This step can increase the crystallinity and hence the strength of the stretched film, and can stabilize the physical properties of the stretched film.

The heating temperature during heat setting is preferably from 80 to 150°C, more preferably from 90 to 135°C, and most preferably from 100 to 130°C. When the heating temperature is 80°C or higher, the crystallinity of the stretched film increases, and the resulting crystals can have a high melting point. When the heating temperature is 150°C or lower, breakage of the film due to melting can be avoided.

The heat setting can be carried out, for example, by heating the film while maintaining its stretched state after the stretching step. During this step, since the film thermally shrinks in the direction opposite to the stretch direction, relaxation is preferably performed to prevent breakage of the film. The relaxation is a procedure in which the film is allowed to retract in the direction opposite to the stretch direction. The amount of relaxation is preferably adjusted as appropriate between 5% and 30%.

Subsequently, the step of cooling the film may be performed as appropriate. Subsequently, the step of winding the film onto a take-up roll is preferably performed.

In the extrusion film production method according to the present embodiment, it is preferable to transfer the film continuously throughout all steps from melt extrusion to the final step. In this case, extruded film production with high productivity can be accomplished by an industrially simple process. The production method according to the present embodiment can be carried out while continuously winding the produced extruded film onto a take-up roll.

When the extruded film is continuously transferred, the transfer speed is not limited to a particular range. In terms of film productivity, the transfer speed is preferably 5 m/min or higher before the start of stretching. In terms of production stability, the transfer speed is preferably 50 m/min or lower before the start of stretching.

### [Laminate]

The extruded film according to the present embodiment may be a resin film consisting of a single self-supporting layer. Alternatively, a laminate may be formed by placing another layer on one or both sides of the film. Such a laminate is also one aspect of the present invention.

Examples of the other layer include a resin layer, an inorganic layer, a metal layer, a metal oxide layer, and a printed layer. These other layers may be lamination layers, coating layers, or vapor-deposited layers.

The resin layer, which is one form of the other layer in the laminate, is not limited to a particular type. In order to enhance the biodegradability of the laminate as a whole, the resin layer is preferably a layer containing a poly(3-hydroxyalkanoate) resin (C). The poly(3-hydroxyalkanoate) resin (C) is not limited to a particular type and may be any of the poly(3-hydroxyalkanoate) resins described above for the poly(3-hydroxyalkanoate) copolymer (A) and the poly(3-hydroxybutyrate) (B). Components other than the poly(3-hydroxyalkanoate) resin (C) are not limited to particular materials, and any components known as additives for resin layers may be used. The resin layer may function as a heat-sealable layer.

### [Applications of Film]

The film according to the present embodiment can be suitably used as a packaging film, a heat-sealable film, or a twist film.

In the following items, preferred aspects of the present disclosure are listed. The present invention is not limited to the following items.

### [Item 1]

An extruded film containing a poly(3-hydroxyalkanoate) copolymer (A) and a poly(3-hydroxybutyrate) (B).

### [Item 2]

The extruded film according to item 1, wherein the poly(3-hydroxyalkanoate) copolymer (A) includes at least two poly(3-hydroxyalkanoate) copolymers differing in types and/or proportions of constituent monomers.

### [Item 3]

The extruded film according to item 1 or 2, wherein the poly(3-hydroxyalkanoate) copolymer (A) includes a copolymer (A-1) that contains 3-hydroxybutyrate units and other hydroxyalkanoate units and in which a proportion of the other hydroxyalkanoate units is 24 mol% or more.

### [Item 4]

The extruded film according to item 3, wherein an amount of the poly(3-hydroxybutyrate) (B) is from 2 to 75 wt% based on a total weight of the poly(3-hydroxyalkanoate) copolymer (A) and the poly(3-hydroxybutyrate) (B).

### [Item 5]

The extruded film according to item 3 or 4, wherein an amount of the copolymer (A-1) is from 5 to 85 wt% based on a total weight of the poly(3-hydroxyalkanoate) copolymer (A) and the poly(3-hydroxybutyrate) (B).

### [Item 6]

The extruded film according to any one of items 3 to 5, wherein the poly(3-hydroxyalkanoate) copolymer (A) further includes a copolymer (A-2) that contains 3-hydroxybutyrate units and other hydroxyalkanoate units and in which a proportion of the other hydroxyalkanoate units is from 1 to less than 5 mol%.

### [Item 7]

The extruded film according to any one of items 3 to 6, wherein the poly(3-hydroxyalkanoate) copolymer (A) further includes a copolymer (A-3) that contains 3-hydroxybutyrate units and other hydroxyalkanoate units and in which a proportion of the other hydroxyalkanoate units is from 5 to less than 24 mol%.

### [Item 8]

The extruded film according to any one of items 3 to 7, wherein the extruded film is a T-die film.

### [Item 9]

The extruded film according to item 1 or 2, wherein the poly(3-hydroxyalkanoate) copolymer (A) includes a reaction product (A') of a poly(3-hydroxyalkanoate) copolymer and an organic peroxide.

### [Item 10]

The extruded film according to item 9, wherein the reaction product (A') includes a reaction product of a copolymer (A-1) and an organic peroxide, the copolymer (A-1) being a copolymer that contains 3-hydroxybutyrate units and other hydroxyalkanoate units and in which a proportion of the other hydroxyalkanoate units is 24 mol% or more.

### [Item 11]

The extruded film according to item 10, wherein an amount of the copolymer (A-1) is from 5 to 60 wt% based on a total weight of the poly(3-hydroxyalkanoate) copolymer (A) and the poly(3-hydroxybutyrate) (B).

### [Item 12]

The extruded film according to any one of items 9 to 11, wherein an amount of the poly(3-hydroxybutyrate) (B) is from 5 to 60 wt% based on a total weight of the poly(3-hydroxyalkanoate) copolymer (A) and the poly(3-hydroxybutyrate) (B).

### [Item 13]

The extruded film according to any one of items 9 to 12, wherein the poly(3-hydroxybutyrate) (B) is a reaction product of poly(3-hydroxybutyrate) and an organic peroxide.

### [Item 14]

The extruded film according to any one of items 9 to 13, wherein the poly(3-hydroxyalkanoate) copolymer (A) further includes a copolymer (A-2) that contains 3-hydroxybutyrate units and other hydroxyalkanoate units and in which a proportion of the other hydroxyalkanoate units is from 1 to less than 5 mol%.

### [Item 15]

The extruded film according to item 14, wherein the reaction product (A') includes a reaction product of the copolymer (A-2) and an organic peroxide.

### [Item 16]

The extruded film according to any one of items 9 to 15, wherein the poly(3-hydroxyalkanoate) copolymer (A) includes a copolymer (A-3) that contains 3-hydroxybutyrate units and other hydroxyalkanoate units and in which a proportion of the other hydroxyalkanoate units is from 5 to less than 24 mol%.

### [Item 17]

The extruded film according to item 16, wherein the reaction product (A') includes a reaction product of the copolymer (A-3) and an organic peroxide.

### [Item 18]

The extruded film according to any one of items 9 to 17, wherein the extruded film is a stretched film.

### [Item 19]

The extruded film according to item 1 or 2, wherein
the poly(3-hydroxyalkanoate) copolymer (A) includes a copolymer (A-3') that contains 3-hydroxybutyrate units and other hydroxyalkanoate units, in which a proportion of the other hydroxyalkanoate units is from 5 to less than 24 mol%, and that has a weight-average molecular weight of 70 × 10⁴ or more,
an amount of the copolymer (A-3') is from 20 to 80 wt% based on a total weight of the poly(3-hydroxyalkanoate) copolymer (A) and the poly(3-hydroxybutyrate) (B), and
an amount of the poly(3-hydroxybutyrate) (B) is from 5 to 60 wt% based on the total weight of the poly(3-hydroxyalkanoate) copolymer (A) and the poly(3-hydroxybutyrate) (B).

### [Item 20]

The extruded film according to item 19, wherein the poly(3-hydroxyalkanoate) copolymer (A) further includes a copolymer (A-3") that contains 3-hydroxybutyrate units and other hydroxyalkanoate units, in which a proportion of the other hydroxyalkanoate units is from 5 to less than 24 mol%, and that has a weight-average molecular weight of less than 70 × 10⁴. [Item 21]

The extruded film according to item 19 or 20, wherein the extruded film is a stretched film.

### [Item 22]

The extruded film according to any one of items 1 to 21, wherein the other hydroxyalkanoate units include 3-hydroxyhexanoate units.

### [Item 23]

The extruded film according to any one of items 1 to 22, further containing talc and/or a fatty acid amide.

### [Item 24]

The extruded film according to any one of items 1 to 23, being substantially free of any sugar alcohol.

### Examples

Hereinafter, the present invention will be described more specifically with reference to Examples and Comparative Examples. The present invention is not limited by Examples in any respect.

In Examples and Comparative Examples, the following materials were used.

### (Poly(3-Hydroxyalkanoate) Copolymer (A))

Poly(3-hydroxybutyrate-co-3-hydroxyhexanoate) (P3HB3HH) resins PHBH-1 to PHBH-3 listed below were used as P3HA copolymers (A). The term "3HB" refers to 3-hydroxybutyrate repeating units, and "3HH" refers to 3-hydroxyhexanoate repeating units.
PHBH-1 (A-1): P3HB3HH (average ratio 3HB/3HH = 71.8/28.2 (mol%/mol%), weight-average molecular weight = 66 × 10⁴ g/mol)

This copolymer was produced according to the method described in Example 9 of WO 2019/142845 A1.
PHBH-2 (A-2): P3HB3HH (average ratio 3HB/3HH = 97.2/2.8 (mol%/mol%), weight-average molecular weight = 66 × 10⁴ g/mol)

This copolymer was produced according to the method described in Example 1 of WO 2019/142845 A1.
PHBH-3 (A-3): P3HB3HH (average ratio 3HB/3HH = 94/6 (mol%/mol%), weight-average molecular weight = 78 × 10⁴ g/mol)

This copolymer was produced according to the method described in WO 2008/010296 A1.
PHBH-4 (A-3): P3HB3HH (average ratio 3HB/3 HH = 89/11 (mol%/mol%), weight-average molecular weight = 35 × 10⁴ g/mol).

This copolymer was produced according to the method described in WO 2008/010296 A1.

### (Poly(3-Hydroxybutyrate) (B))

The following PHB was used as P3HB (B).
PHB: Poly(3-hydroxybutyrate) (weight-average molecular weight = 35 × 10⁴ g/mol)

This polymer was produced according to the method described in Comparative Example 1 of WO 2004/041936 A1.

### (Inorganic Filler)

C-1: Talc (SG-200N15, manufactured by Nippon Talc Co., Ltd.)

### (Lubricant)

C-2: Behenamide (BNT-22H, manufactured by Nippon Fine Chemical Co., Ltd.)

In Examples and Comparative Examples, the following evaluations were conducted.

### <T-Die Film Moldability>

T-die film moldability was rated according to the following criteria based on the T-die film haul-off speed during T-die film production.
Good: The haul-off speed was 3 m/min or higher.
Average: The haul-off speed was 1 m/min or higher.
Poor: The haul-off speed was lower than 1 m/min.

### <Elastic Modulus, Tensile Strength, and Elongation at Break of Film>

The film as the object of evaluation was stored at 50°C for 3 days, after which the film was tested according to JIS K 7113. Specifically, the film was punched to give five dumbbell specimens (Type 2 (1/3) as specified in JIS K 7113) in the MD direction and/or the TD direction, and the specimens were tested for elastic modulus, tensile strength, and elongation at break using a tensile tester ("EZ Test EZ-LX" manufactured by Shimadzu Corporation) at a test speed of 100 mm/min. The measurement and calculation were performed five times, and the averaged values are shown as "Elastic modulus", "Tensile strength", and "Elongation at break" in the tables below.

### <Tear Strength of Film>

The film as the object of evaluation was stored at 50°C for 3 days, after which the film was tested for tear strength using the Elmendorf tear method according to JIS K 7128-2. The measurement was performed five times, and the averaged value is shown as "Tear strength" in the tables below.

### (Example 1)

### (Method for Producing Resin Composition)

An amount of 30 parts by weight of poly(3-hydroxyalkanoate) resin PHBH-1, 30 parts by weight of PHBH-2, 20 parts by weight of PHBH-3, 7 parts by weight of PHBH-4, and 13 parts by weight of PHB were dry-blended with 1 part by weight of C-1 as an inorganic filler and 1 part by weight of C-2 as a lubricant. The resulting resin material was fed into the hopper of a 26-mm-diameter corotating twin-screw extruder whose cylinder temperature and die temperature were set to 160°C. The resin material was melted and kneaded in the extruder and extruded as a strand through the die. The extruded strand was solidified by passing it through a water bath filled with 45°C hot water. The solidified strand was cut using a pelletizer to obtain resin pellets P-1.

### (Production of T-Die Film)

A T-die with a width of 350 mm was coupled to a 40-mm-diameter single-screw extruder, and the cylinder temperature and die temperature of the single-screw extruder were set to 170°C.

The resin pellets P-1 were introduced into the single-screw extruder, and the resin material was extruded as a film through the T-die. The molded film was cooled on a cooling roll (diameter = 250 mm) at a set temperature of 60°C, and the cooled film was taken up onto a take-up roll. In this manner, a T-die film with a thickness of 60 µm was produced. The T-die film moldability was evaluated during the T-die film production, and the result is shown in Table 1. The obtained T-die film was evaluated for elastic modulus, tensile strength, elongation at break, and tear strength, and the results are shown in Table 1.

### (Examples 2 to 4)

Resin pellets were produced in the same manner as in Example 1, except that the formulation was changed as shown in Table 1. Film production was carried out in the same manner as in Example 1, and the T-die film moldability, elastic modulus, tensile strength at break, elongation at break, and tear strength were evaluated. The evaluation results are shown in Table 1.

In Examples 1 to 3, film molding was successfully carried out at a haul-off speed of 3.5 m/min without sticking of the resin material to the cooling roll. In Example 4, continuous film production was feasible although the molding speed was at most 1 m/min.

### (Comparative Example 1)

Resin pellets were produced in the same manner as in Example 1, except that the formulation was changed as shown in Table 1. Film production was attempted in the same manner as in Example 1; however, a T-die film was not obtained due to sticking of the resin material to the cooling roll.

**[Table 1]**

| | | | Units | Ex. 1 | Ex. 2 | Ex. 3 | Ex. 4 | Comp. 1 |
|---|---|---|---|---|---|---|---|---|
| Formulation | P3HA copolymer (A) | PHBH-1 (HH: 28 mol/Mw: 66 × 10⁴) | wt% | 30 | 30 | 30 | 30 | 30 |
| | | PHBH-2 (HH: 3 mol/Mw: 66 × 10⁴) | wt% | 30 | 30 | 30 | 30 | 30 |
| | | PHBH-3 (HH: 6 mol/Mw: 78 × 10⁴) | wt% | 20 | 10 | 0 | 35 | 40 |
| | | PHBH-4 (HH: 11 mol/MW: 35 × 10⁴) | wt% | 7 | 10 | 13 | 2 | 0 |
| | P3HB (B) | PHB (HH: 0 mol/Mw: 35 × 10⁴) | - | 13 | 20 | 27 | 3 | 0 |
| | Inorganic filler | C-1 | parts by weight ¹⁾ | 1 | 1 | 1 | 1 | 1 |
| | Lubricant | C-2 | parts by weight ¹⁾ | 1 | 1 | 1 | 1 | 1 |
| Evaluation results | T-die film moldability | | - | Good | Good | Good | Average | Poor |
| | Film physical properties | Elastic modulus (MD/TD) | MPa | 1198/1127 | 1290/1366 | 1578/1484 | 1142/1125 | - |
| | | Tensile strength (MD/TD) | MPa | 33/31 | 29/27 | 32/21 | 37/31 | - |
| | | Elongation at break (MD/TD) | % | 371/363 | 329/304 | 338/198 | 378/409 | - |
| | | Tear strength (MD/TD) | mN/µm | 4.4/2.7 | 3.0/3.6 | 3.1/3.8 | 2.5/3.5 | - |

| | | | | | | | | |
|---|---|---|---|---|---|---|---|---|
| *1) Parts by weight per 100 parts by weight of total amount of components (A) and (B) | | | | | | | | |

Table 1 reveals that in Examples 1 to 4, extruded films were produced continuously with high productivity. The productivity was particularly high in Examples 1 to 3. In contrast, in Comparative Examples 1, where the resin material did not contain the poly(3-hydroxybutyrate) (B), the molten resin material stuck to the cooling roll, and continuous film production was not possible.

In Examples and Comparative Examples listed in Table 2, the following material was used in addition to the materials described above.

### (Organic Peroxide)

E-1: Perbutyl I manufactured by NOF Corporation (*t*-butylperoxyisopropyl carbonate, one-minute half-life temperature: 159°C)

### (Example 5)

### (Method for Producing Resin Composition)

An amount of 7.5 parts by weight of poly(3-hydroxyalkanoate) resin PHBH-1, 7.5 parts by weight of PHBH-2, 65 parts by weight of PHBH-3, 7 parts by weight of PHBH-4, and 13 parts by weight of PHB were dry-blended with 1.0 parts by weight of C-1 as an inorganic filler, 1.0 parts by weight of C-2 as a lubricant, and 0.2 parts by weight of E-1 as an organic peroxide. The resulting resin material was fed into the hopper of a 26-mm-diameter corotating twin-screw extruder whose cylinder temperature and die temperature were set to 160°C. The resin material was melted and kneaded in the extruder and extruded as a strand through the die. The extruded strand was solidified by passing it through a water bath filled with 45°C hot water. The solidified strand was cut using a pelletizer to obtain resin pellets P-2. In the course of melting and kneading, the P3HA copolymer (A) reacted with the organic peroxide to form a reaction product (A').

### (Production of Film Uniaxially Stretched in MD Direction)

A T-die with a width of 350 mm was coupled to a 40-mm-diameter single-screw extruder, and the cylinder temperature and die temperature of the single-screw extruder were set to 170°C.

The resin pellets P-2 were introduced into the single-screw extruder, and the resin material was extruded as a film through the T-die. The molded film was cooled on a cooling roll at a set temperature of 60°C, and the cooled film was taken up onto a take-up roll. In this manner, a T-die film was produced. The T-die film was continuously stretched in the longitudinal (MD) direction using a roll longitudinal stretching machine at a stretch temperature of 135°C and at a stretch ratio of 2.5, and thus a stretched film with a thickness of 30 µm was produced.

The T-die film moldability was evaluated based on the haul-off speed during T-die film production, and the result is shown in Table 2. The obtained stretched film was evaluated for elastic modulus, tensile strength at break, elongation at break, and tear strength, and the results are shown in Table 2.

### (Examples 6 and 7)

Resin pellets were produced in the same manner as in Example 5, except that the formulation was changed as shown in Table 2. Film production was performed in the same manner as in Example 5, and the T-die film moldability, elastic modulus, tensile strength at break, elongation at break, and tear strength were evaluated. The film stretch temperature was varied as appropriate between 60 and 140°C. The evaluation results are shown in Table 2.

### (Example 8)

Before the stretching step, the T-die film of Example 5 was evaluated for elastic modulus, tensile strength at break, elongation at break, and tear strength. The results are shown in Table 2.

### (Example 9)

Resin pellets were produced in the same manner as in Example 5, except that the formulation was changed as shown in Table 2. Film production was performed in the same manner as in Example 5, and the T-die film moldability was evaluated. Stretched film production was also attempted in the same manner as in Example 5; however, a stretched film was not produced due to film breakage during stretching.

### (Comparative Example 2)

Resin pellets were produced in the same manner as in Example 5, except that the formulation was changed as shown in Table 2. Film production was attempted in the same manner as in Example 5; however, a T-die film was not obtained due to sticking of the resin material to the cooling roll.

**[Table 2]**

| | | | Units | Ex. 5 | Ex. 6 | Ex. 7 | Ex. 8 | Ex. 9 | Comp. 2 |
|---|---|---|---|---|---|---|---|---|---|
| Formulation | P3HA copolymer (A) | PHBH-1 (HH: 28 mol/Mw: 66 × 10⁴) | wt% | 7.5 | 30 | 37.5 | 7.5 | 30 | 30 |
| | | PHBH-2 (HH: 3 mol/Mw: 66 × 10⁴) | wt% | 7.5 | 30 | 37.5 | 7.5 | 30 | 30 |
| | | PHBH-3 (HH: 6 mol/Mw: 78 × 10⁴) | wt% | 65 | 20 | 5 | 65 | 20 | 40 |
| | | PHBH-4 (HH: 11 mol/MW: 35 × 10⁴) | wt% | 7 | 7 | 7 | 7 | 7 | |
| | P3HB (B) | PHB (HH: 0 mol/Mw: 35 × 10⁴) | wt% | 13 | 13 | 13 | 13 | 13 | 0 |
| | Inorganic filler | C-1 | parts by weight ¹⁾ | 1 | 1 | 1 | 1 | 1 | 1 |
| | Lubricant | C-2 | parts by weight ¹⁾ | 1 | 1 | 1 | 1 | 1 | 1 |
| | Organic peroxide | E-1 | parts by weight ¹⁾ | 0.2 | 0.2 | 0.2 | 0.2 | 0 | 0.2 |
| Evaluation results | T-die film moldability | | | Good | Good | Good | Good | Good | Poor |
| | Stretch ratio (MD direction) | | times | 2.5 | 2.5 | 2.5 | 1 (unstretched) | Stretching failed | - |
| | Stretched film physical properties | Elastic modulus (MD/TD) | MPa | 1907/2148 | 698/1012 | 569/810 | 2078/2474 | - | - |
| | | Tensile strength (MD/TD) | MPa | 59/29 | 59/35 | 53/29 | 37/37 | - | - |
| | | Elongation at break (MD/TD) | % | 117/40 | 176/413 | 175/344 | 107/5 | - | - |
| | | Tear strength (MD/TD) | mN/µm | 0.7/5.3 | 0.6/20.3 | 2.1/65.1 | 1.6/2.9 | - | - |

| | | | | | | | | | |
|---|---|---|---|---|---|---|---|---|---|
| *1) Parts by weight per 100 parts by weight of total amount of components (A) and (B) | | | | | | | | | |

Table 2 reveals that in Examples 5 to 9, extruded films were produced continuously with high productivity. In particular, in Examples 5 to 7, where the reaction product (A') of a poly(3-hydroxyalkanoate) copolymer and an organic peroxide was used in combination with the poly(3-hydroxybutyrate) (B), the film productivity was high, and the stretchability was also good.

In Example 9, where the poly(3-hydroxyalkanoate) copolymer (A) unreacted with any organic peroxide was used in combination with the poly(3-hydroxybutyrate) (B), the film productivity was high, but a stretched film was not obtained due to film breakage during the stretching step.

In Comparative Example 2, where the reaction product (A') of a poly(3-hydroxyalkanoate) copolymer and an organic peroxide was used but the poly(3-hydroxybutyrate) (B) was not used, the molten resin material stuck to the cooling roll, and continuous film production was not possible.

In Examples and Comparative Examples listed in Table 3, the following material was used in addition to the materials described above.
PHBH-5 (A-3'): P3HB3HH (average ratio 3HB/3HH = 88.9/11.1 (mol%/mol%), weight-average molecular weight = 78 × 10⁴ g/mol)

This copolymer was produced according to the method described in an example (Raw material A-3) of WO 2013/147139 A1.

### (Example 10)

### (Method for Producing Resin Composition)

An amount of 30 parts by weight of poly(3-hydroxyalkanoate) resin PHBH-3, 7 parts by weight of PHBH-4, 50 parts by weight of PHBH-5, and 13 parts by weight of PHB were dry-blended with 1 part by weight of C-1 as an inorganic filler and 1 part by weight of C-2 as a lubricant. The resulting resin material was fed into the hopper of a 26-mm-diameter corotating twin-screw extruder whose cylinder temperature and die temperature were set to 160°C. The resin material was melted and kneaded in the extruder and extruded as a strand through the die. The extruded strand was solidified by passing it through a water bath filled with 45°C hot water. The solidified strand was cut using a pelletizer to obtain resin pellets P-3.

### (Production of Film Uniaxially Stretched in MD Direction)

A T-die with a width of 350 mm was coupled to a 40-mm-diameter single-screw extruder, and the cylinder temperature and die temperature of the single-screw extruder were set to 170°C.

The resin pellets P-3 were introduced into the single-screw extruder, and the resin material was extruded as a film through the T-die. The molded film was cooled on a cooling roll at a set temperature of 50°C, and the cooled film was taken up onto a take-up roll. In this manner, a T-die film was produced. The T-die film was continuously stretched in the longitudinal (MD) direction using a roll longitudinal stretching machine at a stretch temperature of 135°C, and thus a stretched film with a thickness of 30 µm was produced.

The T-die film moldability was evaluated based on the haul-off speed during T-die film production, and the result is shown in Table 3. The obtained stretched film was evaluated for elastic modulus, tensile strength at break, elongation at break, and tear strength, and the results are shown in Table 3.

### (Examples 11 and 12)

Resin pellets were produced in the same manner as in Example 10, except that the formulation was changed as shown in Table 3. Film production was performed in the same manner as in Example 10, and the T-die film moldability, elastic modulus, tensile strength at break, elongation at break, and tear strength were evaluated. The film stretch temperature and the cooling roll temperature were adjusted as appropriate. The evaluation results are shown in Table 3.

### (Examples 13 to 16)

Resin pellets were produced in the same manner as in Example 10, except that the formulation was changed as shown in Table 3. Film production was performed in the same manner as in Example 10, and the T-die film moldability was evaluated. Stretched film production was also attempted in the same manner as in Example 10; however, a stretched film was not produced due to film breakage during stretching.

### (Comparative Example 3)

Resin pellets were produced in the same manner as in Example 10, except that the formulation was changed as shown in Table 3. Film production was attempted in the same manner as in Example 10; however, a T-die film was not obtained due to sticking of the resin material to the cooling roll.

**[Table 3]**

| | | | Units | Ex. 10 | Ex. 11 | Ex. 12 | Ex. 13 | Ex. 14 | Ex. 15 | Ex. 16 | Comp. 3 |
|---|---|---|---|---|---|---|---|---|---|---|---|
| Formulation | P3HA copolymer (A) | PHBH-1 (HH: 28 mol/Mw: 66 × 10⁴) | wt% | | | | | | | 30 | 30 |
| | | PHBH-2 (HH: 3 mol/Mw: 66 × 10⁴) | wt% | | | | | | | 30 | 30 |
| | | PHBH-3 (HH: 6 mol/Mw: 78 × 10⁴) | wt% | 30 | 20 | 15 | 5 | 80 | 20 | 20 | 40 |
| | | PHBH-4 (HH: 11 mol/Mw: 35 × 10⁴) | wt% | 7 | 7 | 7 | 7 | 7 | 20 | 7 | 0 |
| | | PHBH-5 (HH: 11 mol/Mw: 78 × 10⁴) | wt% | 50 | 60 | 65 | 75 | 0 | 20 | 0 | 0 |
| | P3HB (B) | PHB (HH: 0 mol/Mw: 35 × 10⁴) | wt% | 13 | 13 | 13 | 13 | 13 | **40** | 13 | 0 |
| | Inorganic filler | C-1 | parts by weight ¹⁾ | 1 | 1 | 1 | 1 | 1 | 1 | 1 | 1 |
| | Lubricant | C-2 | parts by weight ¹⁾ | 1 | 1 | 1 | 1 | 1 | 1 | 1 | 1 |
| Evaluation results | T-die film moldability | | | Good | Good | Good | Average | Good | Good | Good | Poor |
| | Stretch ratio | | | 2.5 | 2.5 | 2.5 | Failure | Failure | Failure | Failure | - |
| | Stretched film physical properties | Elastic modulus (MD/TD) | MPa | 2256/2514 | 1740/1590 | 1900/1992 | - | - | - | - | - |
| | | Tensile strength (MD/TD) | MPa | 70/34 | 52/24 | 55/34 | - | - | - | - | - |
| | | Elongation at break (MD/TD) | % | 99/168 | 100/230 | 138/298 | - | - | - | - | - |
| | | Tear strength (MD/TD) | mN/µm | 1.9/59.4 | 0.7/59 | 1.8/8.2 | - | - | - | - | - |

| | | | | | | | | | | | |
|---|---|---|---|---|---|---|---|---|---|---|---|
| *1) Parts by weight per 100 parts by weight of total amount of components (A) and (B) | | | | | | | | | | | |

Table 3 reveals that in Examples 10 to 16, extruded films were produced continuously with high productivity. In particular, in Examples 10 to 12, where the poly(3-hydroxyalkanoate) copolymer (A-3') and the poly(3-hydroxybutyrate) (B) were used in combination in specified amounts, the film productivity was high, and the stretchability was also good.

In Examples 13 to 16, the film productivity was high, but a stretched film was not obtained due to film breakage during the stretching step.

In Comparative Example 3, where the poly(3-hydroxybutyrate) (B) was not used, the molten resin material stuck to the cooling roll, and continuous film production was not possible.

## Claims

1. An extruded film comprising a poly(3-hydroxyalkanoate) copolymer (A) and a poly(3-hydroxybutyrate) (B).

2. The extruded film according to claim 1, wherein the poly(3-hydroxyalkanoate) copolymer (A) comprises at least two poly(3-hydroxyalkanoate) copolymers differing in types and/or proportions of constituent monomers.

3. The extruded film according to claim 1 or 2, wherein the poly(3-hydroxyalkanoate) copolymer (A) comprises a copolymer (A-1) that comprises 3-hydroxybutyrate units and other hydroxyalkanoate units and in which a proportion of the other hydroxyalkanoate units is 24 mol% or more.

4. The extruded film according to claim 3, wherein an amount of the poly(3-hydroxybutyrate) (B) is from 2 to 75 wt% based on a total weight of the poly(3-hydroxyalkanoate) copolymer (A) and the poly(3-hydroxybutyrate) (B).

5. The extruded film according to claim 3, wherein an amount of the copolymer (A-1) is from 5 to 85 wt% based on a total weight of the poly(3-hydroxyalkanoate) copolymer (A) and the poly(3-hydroxybutyrate) (B).

6. The extruded film according to claim 3, wherein the poly(3-hydroxyalkanoate) copolymer (A) further comprises a copolymer (A-2) that comprises 3-hydroxybutyrate units and other hydroxyalkanoate units and in which a proportion of the other hydroxyalkanoate units is from 1 to less than 5 mol%.

7. The extruded film according to claim 3, wherein the poly(3-hydroxyalkanoate) copolymer (A) further comprises a copolymer (A-3) that comprises 3-hydroxybutyrate units and other hydroxyalkanoate units and in which a proportion of the other hydroxyalkanoate units is from 5 to less than 24 mol%.

8. The extruded film according to claim 3, wherein the extruded film is a T-die film.

9. The extruded film according to claim 1 or 2, wherein the poly(3-hydroxyalkanoate) copolymer (A) comprises a reaction product (A') of a poly(3-hydroxyalkanoate) copolymer and an organic peroxide.

10. The extruded film according to claim 9, wherein the reaction product (A') comprises a reaction product of a copolymer (A-1) and an organic peroxide, the copolymer (A-1) being a copolymer that comprises 3-hydroxybutyrate units and other hydroxyalkanoate units and in which a proportion of the other hydroxyalkanoate units is 24 mol% or more.

11. The extruded film according to claim 10, wherein an amount of the copolymer (A-1) is from 5 to 60 wt% based on a total weight of the poly(3-hydroxyalkanoate) copolymer (A) and the poly(3-hydroxybutyrate) (B).

12. The extruded film according to claim 9, wherein an amount of the poly(3-hydroxybutyrate) (B) is from 5 to 60 wt% based on a total weight of the poly(3-hydroxyalkanoate) copolymer (A) and the poly(3-hydroxybutyrate) (B).

13. The extruded film according to claim 9, wherein the poly(3-hydroxybutyrate) (B) is a reaction product of poly(3-hydroxybutyrate) and an organic peroxide.

14. The extruded film according to claim 9, wherein the poly(3-hydroxyalkanoate) copolymer (A) further comprises a copolymer (A-2) that comprises 3-hydroxybutyrate units and other hydroxyalkanoate units and in which a proportion of the other hydroxyalkanoate units is from 1 to less than 5 mol%.

15. The extruded film according to claim 14, wherein the reaction product (A') comprises a reaction product of the copolymer (A-2) and an organic peroxide.

16. The extruded film according to claim 9, wherein the poly(3-hydroxyalkanoate) copolymer (A) comprises a copolymer (A-3) that comprises 3-hydroxybutyrate units and other hydroxyalkanoate units and in which a proportion of the other hydroxyalkanoate units is from 5 to less than 24 mol%.

17. The extruded film according to claim 16, wherein the reaction product (A') comprises a reaction product of the copolymer (A-3) and an organic peroxide.

18. The extruded film according to claim 9, wherein the extruded film is a stretched film.

19. The extruded film according to claim 1 or 2, wherein
the poly(3-hydroxyalkanoate) copolymer (A) comprises a copolymer (A-3') that comprises 3-hydroxybutyrate units and other hydroxyalkanoate units, in which a proportion of the other hydroxyalkanoate units is from 5 to less than 24 mol%, and that has a weight-average molecular weight of 70 × 10⁴ or more,
an amount of the copolymer (A-3') is from 20 to 80 wt% based on a total weight of the poly(3-hydroxyalkanoate) copolymer (A) and the poly(3-hydroxybutyrate) (B), and
an amount of the poly(3-hydroxybutyrate) (B) is from 5 to 60 wt% based on the total weight of the poly(3-hydroxyalkanoate) copolymer (A) and the poly(3-hydroxybutyrate) (B).

20. The extruded film according to claim 19, wherein the poly(3-hydroxyalkanoate) copolymer (A) further comprises a copolymer (A-3") that comprises 3-hydroxybutyrate units and other hydroxyalkanoate units, in which a proportion of the other hydroxyalkanoate units is from 5 to less than 24 mol%, and that has a weight-average molecular weight of less than 70 × 10⁴.

21. The extruded film according to claim 19, wherein the extruded film is a stretched film.

22. The extruded film according to claim 1 or 2, wherein the other hydroxyalkanoate units comprise 3-hydroxyhexanoate units.

23. The extruded film according to claim 1 or 2, further comprising talc and/or a fatty acid amide.

24. The extruded film according to claim 1 or 2, being substantially free of any sugar alcohol.
